(19) Europäisches Patentamt
European Patent Office
Office européen des brevets

(11) **EP 1 675 401 A1**

(12) **EUROPEAN PATENT APPLICATION**

(43) Date of publication:
**28.06.2006 Bulletin 2006/26**

(51) Int Cl.:
***H04N 7/26*** *(2006.01)*

(21) Application number: **04293102.2**

(22) Date of filing: **22.12.2004**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Thomson Licensing**
**92100 Boulogne-Billancourt (FR)**

(72) Inventors:
• **Vieron, Jérome**
**35000 Rennes (FR)**

• **Boisson, Guillaume**
**35000 Rennes (FR)**
• **Burdin, Nicolas**
**35700 Rennes (FR)**

(74) Representative: **Rittner, Karsten et al**
**Deutsche Thomson-Brandt GmbH,**
**Karl-Wiechert-Allee 74**
**30625 Hannover (DE)**

(54) **Method for encoding video data**

(57) A method for encoding video data that are structured into groups of frames (GOF), wherein motion compensated temporal filtering (MCTF) of frames on a plurality of temporal decomposition levels based on a lifting scheme is used, works in two steps. In the first step, different possible partitionings of a group of frames are evaluated, whereby for each partitioning a cost value being a weighted sum of inter-partition backward prediction steps and/or backward update steps is generated. Then the partitioning with the least cost is implemented by cutting certain steps, e.g. inter-partition backward prediction steps and corresponding forward update steps.

Fig.5

**Description**

<u>Field of the invention</u>

This invention relates to a method for encoding video data. In particular, the invention relates to a method for encoding video data that are structured into groups of frames, wherein motion compensated temporal filtering of frames on a plurality of temporal decomposition levels is used.

<u>Background</u>

In most of the current video coding algorithms, such as MPEG-X and/or 3D wavelet based schemes, the first encoding step consists in exploiting temporal correlation between successive frames. After that, the spatial correlation within frames can be captured. Temporal redundancy is reduced using motion compensation transforms. This is known as Motion Compensated Temporal Filtering (MCTF). The spatial redundancy is reduced using spatial transform like e.g. Discrete Cosine Transform (DCT) or Discrete Wavelet Transform (DWT).

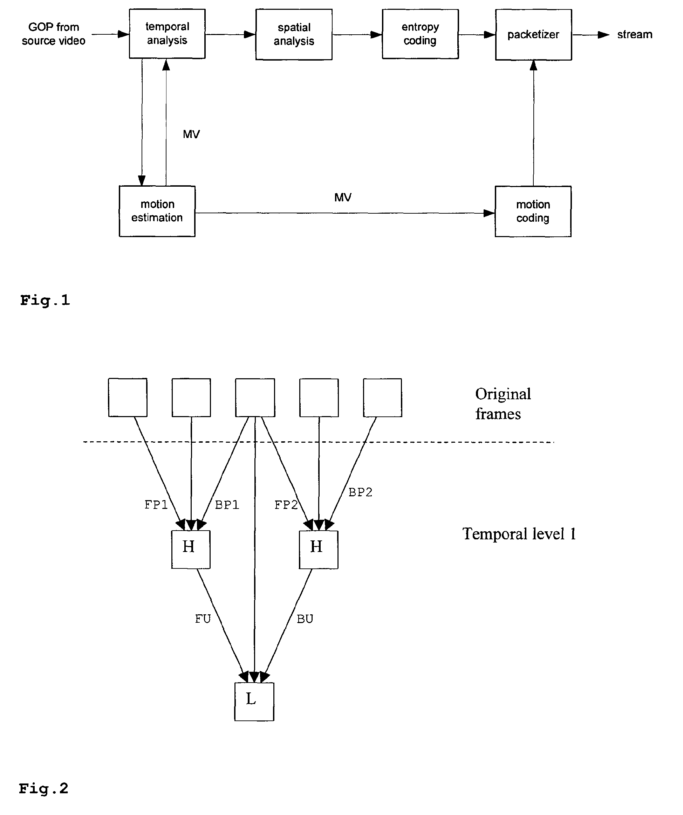

Fig.1 shows the structure of a video encoding scheme. Prior to encoding, consecutive video frames are usually divided into groups of frames (GOF). The coding process is based on the following steps:
First a motion-compensated temporal analysis (MCTF) is done to get different temporal frequency bands. Motion compensation includes usage of motion estimation (ME) to generate motion vectors (MV), which are used in order to minimize the amount of data to be transmitted when an object moves its position in one picture relative to another picture. ME uses either forward or backward or bi-directional referencing. The resulting frames are processed through a spatial analysis. The motion vectors are then encoded using a specific motion-coding component. Coefficients resulting from the complete temporal/spatial analysis are then encoded using an entropy coder. A final merger component concatenates the resulting encoded coefficient and motion vectors to get the final output stream.

MCTF techniques analyse (i.e. filter) sets of n successive video frames and produce subsets of temporal low frequency frames and high frequency frames and associated motion fields, i.e. sets of motion vectors between the filtered sets of n frames. DWT is an iterative method for breaking a signal or a series of values into spectral components, by taking averages and differences of values. Thereby it is possible to view the series of values in different resolutions corresponding to frequencies, or subbands of the spectrum.

The implementation of such a temporal filtering can be done either by a classical convolutive method or the so-called lifting scheme, which is advantageous in terms of flexibility, reversibility, fastness and low memory usage. An elementary lifting stage is the sequence of a "Predict" step comprising forward prediction FP1,FP2 and backward prediction BP1,BP2 and resulting in high frequency frames H, and an "Update" step comprising forward update FU and backward update BU and resulting in a low frequency frame L, as shown in Fig.2. A complete lifting scheme can consist of one or several elementary lifting stages.

Short temporal filtering, e.g. 2-tap filters that are only applied on pairs of frames such as the so-called Haar filters, are often used in video compression. Nevertheless its compaction power is quite limited in comparison with longer filter-banks, such as a 5/3 filter-bank consisting of one 5-tap low band filter coupled with one 3-tap high-band filter.

<u>Summary of the Invention</u>

The described 5/3 filter uses much memory and inserts high delay compared with Haar filtering. The bi-directional Predict and Update steps are responsible for a growing encoding and decoding delay. In the sequel, the cumulated encoding and decoding delay is called "reconstruction latency".

In conventional 5/3 MCTF schemes the reconstruction latency is given by $3 \cdot (2^N-1)$ where N denotes the overall number of temporal levels. The first decomposition stage corresponds to the temporal level 1, and is increased by one for each following dyadic decomposition stage. E.g. for a 3-level temporal filtering the reconstruction latency is 21 frames, and for a 4-level temporal filtering scheme reconstruction latency is 45 frames. Such delays are insufficient for applications that need a short reaction time. Further, a less complex implementation of such a temporal pyramid is desirable.

The present invention aims at improving the described situation, by providing an MCTF architecture that obtains the best trade-off between improved compaction power, i.e. compression efficiency, and delay. In other words, given a reconstruction latency constraint $R_L$ and the overall number of temporal levels N to achieve a required quality, the present invention permits to determine an optimal MCTF structure with regard to the compromise between compression efficiency and total delay of encoder and decoder.

According to the invention, the method for encoding video data using MCTF comprises the steps of determining or defining a desired delay constraint value $R_L$, comparing the delay constraint value with the number of frames within a group of frames, and if the delay constraint value is lower than the number of frames within the group, dividing the group of frames into partitions, so that the number of frames in each partition is lower or equal to the delay constraint value plus one ($R_L$+1), and then filtering the frames of the partitions using a lifting scheme. This filtering comprises forward and backward prediction and forward and backward update steps to generate low frequency frames and high frequency frames. Further according to the invention, backward branches of prediction and/or update steps of said lifting scheme that reach across partition borders, i.e. from one of said partitions to another, are removed. Further, prediction and update steps directed from future to past are possible among neighboring GOFs.

The meaning of the delay constraint value $R_L$ is a maximum cumulated latency, in terms of number of frames or time respectively, which may be inserted by encoding and decoding. Thus, it will usually be an integer number or a time that is transformed via the frame-rate to an integer number.

The invention can also be used if the frames are not yet grouped into GOFs. In this case, a virtual GOF with $2^N$ frames can be assumed to be implicitly present, if N is the number of temporal levels.

According to one aspect of the invention, after virtually dividing the group of frames into partitions, thus defining a partitioning, wherein the number of frames in each partition is lower or equal to the delay constraint value plus one ($R_L$+1), and before actually removing branches, a cost function is used that assigns a cost value to each inter-partition branch of the Predict and Update operators, assigns weights to the cost values and calculates a total cost for the partitioning by summing up the weighted cost values for the whole partitioning. A weight may be an integer, and particularly may also be zero. In a preferred embodiment, the cost function considers only backward branches of prediction and/or update steps, i.e. other inter-partition backward branches are assigned a weight of zero. Further, different partitionings can be generated, and the inventive method includes calculating and comparing the cost values for the different generated partitionings, and selecting the partitioning that minimizes the cost function. The purpose of the cost function is to determine which partitioning is the optimal trade-off between coding efficiency and delay. The actual removing of branches is done when a partitioning was decided, and the branches to remove need not be the same that the cost function considered.

In one embodiment of the invention, when a backward predict step is cut, then also its respective (forward) update step is removed. This means that when a predict step (which would point to a high frequency frame) reaches across partition borders and is thus cancelled, then the update step that starts from said high frequency frame and points back across the partition border is also cancelled. Firstly, this is advantageous in terms of filtering. Secondly, the corresponding motion field needs neither be estimated nor encoded.

Advantageous embodiments of the invention are disclosed in the dependent claims, the following description and the figures.

## Brief description of the drawings

Exemplary embodiments of the invention are described with reference to the accompanying drawings, which show in

Fig.1 the overall architecture of a video encoder;
Fig.2 a lifting stage of a lifting scheme, comprising two elementary lifting steps, predict and update;
Fig.3 an example for partitioning of a GOF of 16 frames; and
Fig.4 an example for an MCTF structure resulting from general partitioning, assuming $R_L$=4 and N=4, wherein the forward update branches corresponding to removed backward predict branches are also removed; and
Fig.5 an example for an MCTF structure resulting from optimized partitioning, assuming $R_L$=4 and N=4.

## Detailed description of the invention

It has been recognized that the Update step is mostly responsible for the high overall encoding/decoding latency.

Among the possible techniques for reducing this delay, totally skipping the Update step e.g. in the described 5/3 filtering has been found to damage the compaction along the temporal axis. On the other hand, usage of Haar filtering at the highest temporal level reduces the size of the temporal pyramid, but gives poorer compression results in the temporal dimension since it is applied on a shorter temporal window than e.g. 5/3 filters.

Based on the observation that the reconstruction delay is essentially due to the number of future frames needed to encode a given frame, suppressing the backward part of the Update and/or Predict operators can reduce the encoding delay. But this approach considers only encoding delay, not the reconstruction latency. This approach can be classified as a "*level-adaptive*" algorithm.

Another method of controlling the reconstruction latency uses temporal partitions that are independently decodable. E.g. using independent, or "closed", GOFs with adapted size reduces inherently the reconstruction latency to the GOFs size. However when the delay constraint is small, this kind of method can be very harmful for compression efficiency due to intra frames frequency. The present invention uses temporal partitions and sub-partitions, i.e. main partition GOFs that are split in sub-partitions and are nearly "closed", i.e. a GOF depends only little on neighbouring GOFs, wherein the dependencies are directed from future to past. In one embodiment, the only dependencies that exist between GOFs are directed into the past, from a current GOF to a previous. According to the invention, a generic formula can be used to determine a (sub)-partitioning as a function of the reconstruction latency constraint $R_L$ and the overall number of temporal levels N. Partitioning of a GOF depends on $R_L$. Further, inter-partition branches may be cut, i.e. branches of the lifting operators that point across partition borders. This approach can be classified as "*time-adaptive*" algorithm.

The first step is to determine or define a desired latency constant $R_L$. A number N of temporal levels for filtering may be given or be predefined. Given the reconstruction latency constraint $R_L$ and the overall number of temporal levels N, the proposed partitioning algorithm results in an optimised trade-off between compression efficiency and delay.

The method uses an algorithm being a generic framework, which is simple and offers the flexibility to use different possible criteria in order to determine the optimal sub-partitioning. By defining appropriate weights, different configurations are conceivable.

When N is the number of temporal levels, the GOF size is given by $2^N$. Let us note $P_k = \{sp_1,...,sp_n\}$ a partitioning of the GOF, with $sp_i$ being a sub-partition. Each sub-partition is defined by a pair of time index (b,e) by:

$$sp_i = \left\{ (b,e) \, / \, b \in 0..2^{N-1}, e \in 1..2^N, e > b \right\} \qquad (\text{eq.1})$$

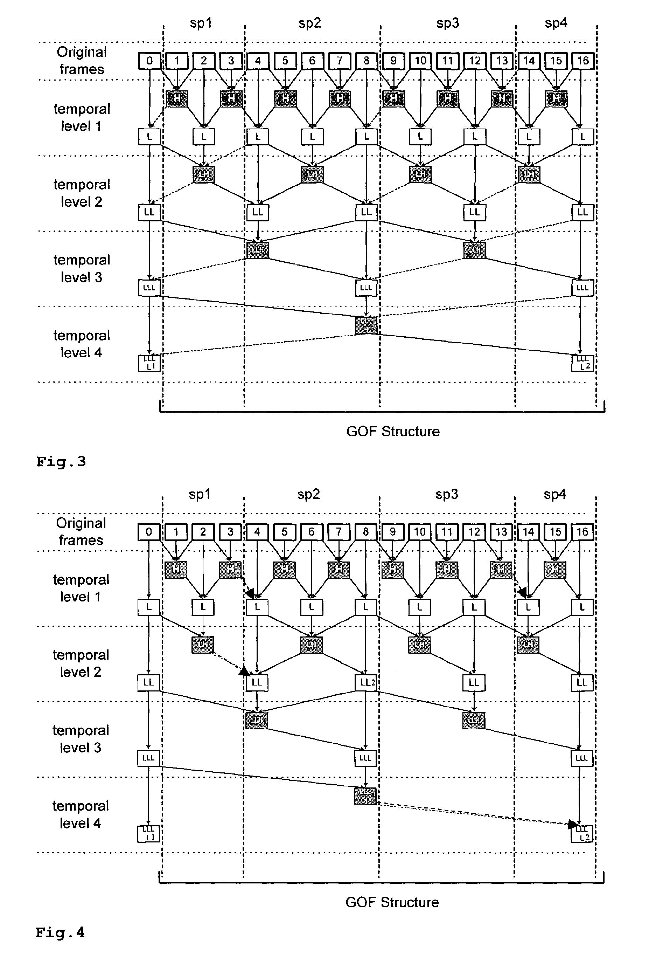

The time indices $b$ and e represent respectively the index of the first and last picture of the sub-partition. Fig. 3 shows an example of partitioning a GOF having 16 frames into four sub-partitions sp1,sp2,sp3,sp4, delimited by the vertical dotted lines, assuming $N$=4 temporal levels. The indices b,e for the respective sub-partitions are in this case $sp_1$ = (0,3) , $sp_2$ = (4,8), $sp_3$ = (9,13) and $sp_4$ = (14,16). The dotted arrows pointing from right to left represent the inter-partition backward branches of the lifting steps, i.e. branches from future to past. These are in the example of Fig.3 :

two backward predict branches for constructing the high frequency frames H and two backward update branches for constructing the low frequency frames L of the temporal level 1,
one backward predict branch for constructing the high frequency frame LH and three backward update branches for constructing the low frequency frames LL of the temporal level 2,
one backward predict branch for constructing the high frequency frame LLH and two backward update branches for constructing the low frequency frames LLL of the temporal level 3, and
one backward predict branch for constructing the high frequency frame LLLH and one backward update branch for constructing the low frame LLLL of the temporal level 4. According to the invention, these inter-partition backward branches of update steps can be removed, which results in a reduced reconstruction latency.

Due to various drawbacks in known solutions it is desirable to define a new algorithm. The main advantages of the inventive solution are the following:

First, it reduces reconstruction delay, because backward branches of the lifting steps are responsible for the delay. Second, Predict steps give a more efficient energy compaction than Update steps. Third, the more important and more relevant relations between frames are preferred. This is because the frames involved in Predict and Update steps have larger temporal distance for higher temporal levels. Therefore, Predict and Update steps at higher temporal levels are less efficient and less important, and may get less impact by assigning them less weight.

One aspect of the invention is to provide a generic method that offers the flexibility to use different possible criteria to decide, under the constraints of $R_L$ and N, the optimal partitioning of a GOF into sub-partitions. It is based on the use of weights that are associated to certain branches depending on the branch type and/or their temporal level. The delay of each frame within a sub-partition is lower than the size of this sub-partition minus one. Thus, assuming a reconstruction latency constraint $R_L$ , the invention comprises dividing the GOF into sub-partitions of sizes not larger than $(R_L+1)$. This sub-partitioning is however only done the following condition is fulfilled: $R_L < 2^N$. Otherwise, if $R_L \geq 2^N$, the GOF is the only partition. Otherwise, the following algorithm is used:

1) Calculate the number n of possible sub-partitions of a GOF, with each sub-partition having not more than $(R_L+1)$ frames. This number is processed as $n = 2^N/(R_L+1)$.
2) Compute the set of possible partitionings $\{P_1,...,P_k\}$ of the GOF. Assuming that $L(sp_i)$ is the size of the sub-partition i and may be up to $R_L+1$, then a partitioning is defined as a set of partitions $sp_1...sp_n$ by:

$$P_k = \left\{ sp_1..sp_n \, / \, L(sp_i) \le (R_L + 1), i = 1..n, \sum_i L(sp_i) = 2^N \right\} \qquad (\text{eq}.2)$$

3) Associate a cost $C(P_k)$ to each partitioning of this set. The optimal partitioning $P_{opt}$ is chosen as $P_{opt} = \min\limits_{j\in1..k} C(P_j)$

The cost is defined by a cost function. The considered cost function C is generally given by:

$$C(P) = \sum_{j=1}^{N} (Wp_j * np_j + Wu_j * nu_j) \qquad (\text{eq}.3)$$

where $np_j$ and $nu_j$ represent respectively the number of inter-partition (i.e. between different sub-partitions) branches of the Predict and Update operators which are at temporal level j. Weights $Wp_j$ and $Wu_j$ are respectively associated to these cardinals. Preferably, only the backward branches are considered. Said branches can, but need not, be the branches that are removed in the next step.

Among the possible weighting policies for selecting $Wp_j$ and $Wu_j$, the choice of partitioning can be based on many different criteria. The following are some examples of criteria and associated weights.

One criterion can be the minimization of the number of removed inter-partition steps. This leads to $Wp_j=1$ and $Wu_j=1$. Another criterion considers that predict steps give more efficient energy compaction and are more important than update steps, and the choice can be based on minimizing the number of removed inter-partition predict steps. This leads to $Wp_j = 1$ and $Wu_j = 0$.

Conversely, the criterion can be based on minimizing the number of removed inter-partition update steps. This leads to $Wp_j=0$ and $Wu_j=1$.

Another approach is that, as the temporal level increases, the frames involved in predict and update steps have larger temporal distance. Thus, predict/update steps at higher temporal levels are less efficient and less important, and can be assigned other weights than predict/update steps at lower temporal levels. E.g. a weight of 1 can be assigned to each predict and update step at the highest temporal level, and the weight is increased (e.g. by 1) for each subsequent lower temporal level, leading to $Wp_1=4, Wp_2=3, Wp_3=2, Wp_4=1$ and $Wu_1=4, Wu_2=3, Wu_3=2, Wu_4=1$.

Combined with the cognition that predict steps are more important than update steps, the choice of partitioning can be based on minimizing the weighted sum of removed inter-partition predict steps. For instance, this can lead to $Wp_1 = 4, Wp_2 = 3,..., Wp_4 = 1$ and $Wu_j = 0$.

In the next step, the decided partitioning is generated by cutting (i.e. ignoring) e.g. the inter-partition backward predict branches.

In one embodiment of the invention, when a given Predict branch is cut then also its respective Update branch is removed.

This is shown in Fig.4, with an exemplary partitioning. E.g. the backward predict branch pointing from the low frequency frame LLL in the temporal level 3 of the fourth sub-partition sp4 to the high frequency frame LLLH in the temporal level 4 of the second sub-partition sp2 is cancelled because it is an inter-partition backward predict branch, and thus the corresponding update forward branch referencing said high frequency frame LLLH in the temporal level 4 of the second sub-partition sp2 and pointing to the low frequency frame LLLL2 in the temporal level 4 of the fourth sub-partition sp4 is also cancelled. Thus, the previously calculated partitioning is implemented by leaving out the respective inter-partition steps. Other branches however, including inter-partition branches, remain.

The mentioned delay constraint value can be defined or determined in any way, e.g. by operator input, input from processing unit, reading from memory etc.

In one embodiment, several constraints on the allowed sub-partitions are fixed, e.g. as described below.

In the following, another aspect of the present invention is described, which can be called constrained time-adaptive partitioning.

The above-described algorithm for selecting the optimal partitioning of a GOF is a generic framework, which permits the use of various criteria according to given constraints, e.g. users constraints, in order to determine the optimal partitioning. In another, second algorithm, based on the above remarks, various configurations of partitioning are preferred or prohibited respectively.

First, the main point is the preservation of Predict steps. Observing the structure of the classical 5/3 MCTF, the best way to preserve the Predict steps is to cut sub-partitions preferably only after an even frame index. Moreover, in such case no Predict step will be removed at temporal level 1, which improves the energy compaction efficiency. Thus, sub-partitions are now defined by:

$$sp_i = \left\{ (b,e) \,/\, b \in 0..2^{N-1}, e \in \{2*m\}, m \in 1..2^{N-1}, e > b \right\} \qquad (eq.4)$$

When $R_L \le 2$ , this constraint can not be respected and we cut after an odd frame index also. However, these cases are so particular that the number of efficient partitionings is extremely reduced.

The second important point is the homogeneity of the reconstruction latencies (i.e. sizes) between the sub-partitions. The algorithm is as following:

If $R_L \ge 2^N$ then we don't need sub-partitions and the GOF is the only partition.
Otherwise, compute the number n of possible sub-partitions of a GOF. This number is processed as $n= [2^N/(R_L+1)]$, as in the algorithm above.
The definition of the possible sub-partitions is:

$$sp_i = \left\{ (b,e) \,/\, b \in 0..2^{N-1}, e \in \{2^{m+k}\}, m = \log_2(2^N/n), k \le (N-m), e > b \right\}$$

This leads to a unique partitioning defined by

$$P_{opt} = \left\{ sp_1..sp_n \,/\, L(sp_i) \le (R_L+1), L(sp_i) = \log_2(2^N/n), i = 1..n, \sum_i L(sp_i) = 2^N \right\}$$

$$(eq.5)$$

Again, as previously described, when a Predict branch is removed then also the respective Update branch is removed.

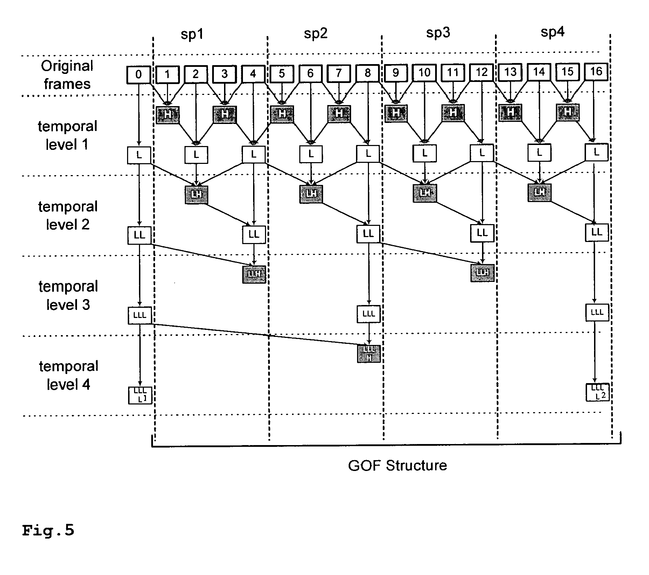

Fig.5 gives the resulting MCTF structure that is obtained by using the second algorithm, exemplarily assuming $R_L=3$ and N=4. For $R_L \in \{3,4,5,6\}$ we obtain the same partitioning and structure, due to the mentioned formula (eq.5) for Popt.

In this second algorithm the allowed sub-partitions boundaries are pre-determined. Various points have driven the choice of the possible boundaries, and are advantages of the inventive method: minimizing the number of removed Predict steps, optimal compression efficiency, and homogeneity of the reconstruction latencies among the resulting sub-partitions.

The present invention comprises two "time-adaptive" algorithms. Given a reconstruction latency constraint $R_L$ and the overall number of temporal levels N, the proposed (sub-)partitioning algorithms lead to the best trade-off between compression efficiency and delay.

The first algorithm provides a generic framework offering the flexibility to use many different possible criteria to decide the optimal partitioning, fulfilling the constraints of $R_L$ and N. It is based on the use of weights associated to the number of removed Predict and Update branches at a given temporal level. Various criteria and associated weights can be used.

The second algorithm provides a way to pre-determine the allowed sub-partition boundaries. Various points have driven the choice of the possible boundaries: minimizing the number of removed Predict steps, improved compression efficiency, and homogeneity of the reconstruction latencies among the resulting sub-partitions.

According to the invention, when a branch of the Predict step is removed, then its respective Update branch is also removed. First because it doesn't make sense in terms of filtering to keep the corresponding Update branch, and second it permits to reduce the number of motion fields to estimate and to encode.

The invention can be implemented as an apparatus with the following features and means:

means for defining a delay constraint value, the delay constraint value indicating a maximum latency that may be inserted by encoding and decoding;
means for comparing the delay constraint value with the number of frames within a group of frames;
means for dividing the group of frames into partitions if the delay constraint value is lower than the number of frames within the group, wherein the number of frames in each partition is lower or equal to the delay constraint value plus one; and

means for filtering the frames of the partitions on one or more temporal decomposition levels, wherein the filtering comprises prediction steps referencing low frequency frames and update steps referencing high frequency frames, and

wherein the prediction and update steps have forward and backward branches and can point to other, neighboring groups of frames, and wherein prediction and/or update steps reaching across said partitions in backward direction are removed.

The method and apparatus for video encoding can be used for video encoders. Advantageously, the resulting frame data structure can be decoded using common standard wavelet decoding.

The encoded signal resulting from the apparatus for video encoding is characterized in that each partition of a group of frames has not more than $R_L+1$ frames, wherein the number of frames per partition may differ, and that predict and/or update branches may be directed to previous partitions, but not to future partitions. Further, the number of temporal levels may be different for different partitions. This results from the above-described removal of predict/update branches during encoding. E.g. in Fig.5 there are frames in the temporal level 4 only in some partitions sp2,sp4. In the mentioned preferred embodiment, the number of frames per partition is even.

An apparatus for decoding contains means that enable it to handle a defined maximum possible number of temporal levels, even if it is more than the $2^K$, where K is the number of frames per partition. Thus, said means consider the number of temporal levels per partition and the maximal possible or allowed number of temporal levels.

## Claims

1. Method for encoding video data, the video data being structured into groups of frames (GOF), wherein motion compensated temporal filtering (MCTF) of frames is used to produce low frequency frames and high frequency frames on one or more temporal decomposition levels, the method comprising the steps of

   - defining a delay constraint value ($R_L$), the delay constraint value ($R_L$) indicating a maximum latency that may be inserted by encoding and decoding;
   - comparing the delay constraint value ($R_L$) with the number of frames within a group of frames (GOF);
   - if the delay constraint value ($R_L$) is lower than the number of frames within the group, dividing the group of frames (GOF) into partitions (sp1,..., sp4), wherein the number of frames in each partition (sp1,...,sp4) is lower or equal to the delay constraint value ($R_L$) plus one; and
   - filtering (MCTF) the frames of the partitions (sp1,...,sp4) on one or more temporal decomposition levels, wherein the filtering (MCTF) comprises prediction steps referencing low frequency frames and update steps referencing high frequency frames, and wherein the prediction and update steps have forward and backward branches and can point to other, neighboring groups of frames, and wherein backward prediction and/or update steps reaching across said partitions are removed.

2. Method according to claim 1, further comprising the steps of

   - defining a plurality of different partitionings of the group of frames (GOF), if the delay constraint value ($R_L$) is lower than the number of frames within the group, wherein the number of frames in each partition (sp1,...,sp4) of each partitioning is lower or equal to the delay constraint value ($R_L$) plus one;
   - defining a cost function, the cost function being for a given partitioning a weighted sum of the number of backward branches of prediction and/or update operations across partition borders;
   - determining for each of the defined partitionings a cost value using said cost function;
   - selecting from the plurality of possible different partitionings the optimal partitioning, wherein the optimal partitioning is the one with the least cost value.

3. Method according to claim 1 or 2, wherein in said cost function the weight of the number of update operation backward branches across partition borders is different than the weight for the number of predict operation backward branches across partition borders.

4. Method according to any of the preceding claims, wherein the backward branches of prediction and/or update steps that reach across partition borders are left out or cancelled.

**5.** Method according to claim 4, wherein backward predict branches pointing to high frequency frames across partition borders are cancelled, and forward update branches referencing said high frequency frames are also cancelled.

**6.** Method according to any of the preceding claims, wherein in said cost function the weight factors are different for different temporal levels.

**7.** Method according to the preceding claim, wherein in said cost function the weight factors are lower for higher temporal levels.

**8.** Method according to any of the preceding claims, wherein said dividing the group of frames (GOF) into partitions comprises selecting an even number of frames per partition if said delay constraint value ($R_L$) is three or more.

**9.** An apparatus for video encoding, using a method disclosed in any of the claims 1-7.

**10.** An apparatus for decoding a video signal generated by an apparatus according to the previous claim.

**Fig.1**

**Fig.2**

**Fig.3**

**Fig.4**

GOF Structure

Fig.5

European Patent
Office

**EUROPEAN SEARCH REPORT**

Application Number

EP 04 29 3102

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | H. SCHWARZ, J. SHEN, D. MARPE, T. WIEGAND: "Technical Description of HHI Proposal for SVC CE3" ISO/IEC JTC1/SC29/WG11 MPEG2004/M11246, October 2004 (2004-10), pages 1-13, XP002329593 PALMA DE MALLORCA, SPAIN | 1,4,8-10 | H04N7/26 |
| A | * page 1, line 1 - page 3, paragraph 3; figures 1-7 * * page 8, paragraph 1 * | 2,3,5-7 | |
| X | G. PAU, B. PESQUET-POPESCU, M. VAN DER SCHAAR, J. VIERON: "Delay-performance Trade-offs in Motion-compensated Scalable Subband Video" PROC. OF ADVANCED CONCEPTS FOR INTELLIGENT VISION SYSTEMS (ACIVS), September 2004 (2004-09), pages 1-5, XP002329594 BRUSSELS, BELGIUM | 1,4,9,10 | |
| A | * abstract * * page 1, left-hand column, line 28 - line 33 * * page 1, right-hand column, paragraph 2 - page 3, left-hand column, line 21; figure 1; tables 1,2 * * page 4, left-hand column, line 18 - page 5, left-hand column, line 16 * | 2,3,5-8 | TECHNICAL FIELDS SEARCHED (Int.Cl.7) H04N |

-/--

The present search report has been drawn up for all claims

| Place of search | Date of completion of the search | Examiner |
|---|---|---|
| Berlin | 27 May 2005 | Heising, G |

CATEGORY OF CITED DOCUMENTS

X : particularly relevant if taken alone
Y : particularly relevant if combined with another
　　document of the same category
A : technological background
O : non-written disclosure
P : intermediate document

T : theory or principle underlying the invention
E : earlier patent document, but published on, or
　　after the filing date
D : document cited in the application
L : document cited for other reasons

& : member of the same patent family, corresponding
　　document

EPO FORM 1503 03.82 (P04C01)

**European Patent Office**

**EUROPEAN SEARCH REPORT**

Application Number

EP 04 29 3102

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | TURAGA D S ET AL: "Unconstrained motion compensated temporal filtering (UMCTF) for efficient and flexible interframe wavelet video coding" SIGNAL PROCESSING. IMAGE COMMUNICATION, ELSEVIER SCIENCE PUBLISHERS, AMSTERDAM, NL, [Online] vol. 20, no. 1, 22 September 2004 (2004-09-22), pages 1-25, XP002329595 ISSN: 0923-5965 Retrieved from the Internet: URL:http://www.sciencedirect.com> [retrieved on 2005-05-20] * abstract * * sections 3.3, 3.4 and 5 * ----- | 1-10 | |
| A | OHM J-R: "Complexity and Delay Analysis of MCTF Interframe Wavelet Structures" ISO/IEC JTC1/SC29/WG11 MPEG02/M8520, July 2002 (2002-07), pages 1-16, XP002282535 * page 9, line 1 - page 10, last line ; figures 6,10,11 * * page 12, last paragraph - page 13, last paragraph * ----- | 1-10 | TECHNICAL FIELDS SEARCHED (Int.Cl.7) |

The present search report has been drawn up for all claims

| Place of search | Date of completion of the search | Examiner |
|---|---|---|
| Berlin | 27 May 2005 | Heising, G |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)